# EUROPEAN PATENT APPLICATION

(11) **EP 2 878 441 A1**
(43) Date of publication of application: **03.06.2015**
(21) Application number: 14195371.1
(22) Date of filing: 28.11.2014
(51) Int. Cl.: B32B 7/00, B32B 7/02, B32B 7/04, B32B 7/10, B32B 7/12, B32B 27/00, B32B 27/06, B32B 27/08, B32B 27/16, B32B 27/26, B32B 27/28, B32B 27/30, B32B 27/32, B32B 27/36, B32B 27/38, B32B 27/40, B32B 3/00, B32B 3/02, B32B 3/16, B32B 3/26, B44C 3/00

(54) **A multi-layer lenticular film**

(30) Priority: 02.12.2013 PL 40632613
(71) Applicant: Axxel Sp. z o.o., 45-254 Opole (PL)
(72) Inventor: Jastrzebski, Juliusz, 45-254 Opole (PL)
(74) Representative: Markieta, Jaroslaw Franciszek

(57) **Abstract**

The subject of the application is the multilayer printing laminate (1) using the effect of spatially or graphically or color changing image, containing a layer of printed lenticular foil (4), characterized in that it also contains an external transparent layer of protective foil (3) of a high surface tension, placed on a layer of a lenticular foil (4), from the side of inciding light, which is permanently connected with a layer of a lenticular foil, with the reservation that a lenticular layer (4) and a protective foil layer (3) have sharp edges, and also laminate contains a surface layer made of transparent resin (2), of a high surface tension, whereby a sharp edge of protective layer and lenticular layer can create a convex meniscus and limit the outflow of plastic outside the edge of cut protective layer and lenticular layer.

## Description

The subject of the invention is multilayer printing laminate.

The invention is used in printing, in particular for the production of convex image, with the use of the effects of spatial image or graphic or color changing image.

The state of the art provides for the applications of lenticular foil to create graphic or color changing images.

In particular, the document US7898737 (Tracer Imaging LLC) presents detachable label with lens including: a transparent sheet with a flat first side and the second side, the lenticular area is placed on the first side, and the second side is printed on and covered by a layer of low viscosity adhesive, where the adhesive is selected to ensure that the label will stick to the surface where the label is attached in a detachable manner.

The document US20040219302 (Roger Heathcote, Donald Krause) refers to the method of selectively depositing optically variable elements, in particular lenticular elements, on various surfaces, in particular local deposition of various lens phenomena utilizing elements.

In addition, given the state of the art, the document US6596361 (Ccl Label, Inc.) presents a method to produce lens labels on a smooth roll of perpendicularly arranged towards longitudinal cloth axis lenticular lenses. The process includes the following stages: constantly moving stripes of label covered with adhesive on two sides, placing many sheets of lens sets and fastening sheets of lens sets on one side of the continuous ribbon, where lenticular elements from lens sets are oriented perpendicularly to the length of continuous ribbon.

The document US7212346 (National Graphics, Inc.) presents a method to create a continuous ribbon of lens image labels; this method includes: introducing a continuous label securing ribbon including an upper side and a bottom side; introducing a continuous printed lenticular layer and connecting the two layers to obtain a label with lenticular printing.

The advantage of the invention is obtaining laminate where optically varing effect obtained with the use of lenticular foil is strengthened through adding additional protective layer. The use sharp edges together with the use of convex meniscus effect of the poured resin layer allows to limit the use of resin and prevent from outflow of resin outside the lenticular foil area.

The object of the invention was presented in detail in a preferred embodiment in a drawing, where:

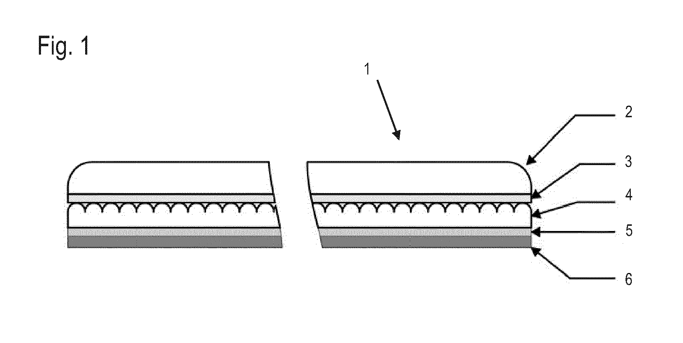

- Fig. 1: presents a cross-section of laminate with lenticular foil according to the invention;

Figure 1 presents the example of producing laminate 1 according to the invention. It is composed of several layers of various plastic materials allowing for viewing three-dimensional images and changing images in various 3D imaging systems, created as a printing on lenticular foil, through a layer of poured plastic giving the effect of smooth transparent bulge.

Laminate 1, in figure 1, is composed of resin layer 2, BOPP foil 3 (double-sided oriented polypropylene foil), lenticular foil 4, adhesive film 5 and load-bearing layer 6 of adhesive film.

Laminate is produced in few operations. At the first stage, the printed sheets of lenticular foil 4 or printed ribbon of lenticular foil with the definition from 75 Ipi to 200 Ipi (lenses per inch) is connected to the adhesive film 5 on the paper surface 6 or plastic surface with cold or hot lamination method. The unified ribbon of material created in this way undergoes another lamination operation, with the use of cold or hot lamination method, BOPP 3 or polyester foil, or foil with polyethylene terephthalate or vinyl, which is 5 to 150 microns thick. This foil satisfies the requirement of high transparency and solid connection with a layer of lenticular foil 4.

Multilayer laminate that has been developed in the above specified manner undergoes the process of cutting with shaping knives or laser beam which cuts it only to the protective layer of adhesive carrier, without cutting the latter.

During the final stage of the cutting process, laminate is removed (the area outside the actual graphic) which is not the essence of the developed product. This operation results in the creation of continuous ribbon or surface sheets of adhesion layer with three-dimensional objects attached to it, including the following layers: adhesion layer 5, lenticular layer 4 and foil protecting 3 lenticular foil.

The last operation is to pour the objects with polyurethane resin (2) cured with UV radiation or cured chemically, or epoxy, polyester or silicone resin. Sharp edges of cut-off shapes, due to the phenomenon of convex meniscus, allow for pouring resin without its outflow outside the shape area. To this extent, it is important for the foil 3 protecting lenticular foil 4 to have appropriate surface tension and appropriate adhesion to the surface and most important appropriately high transparency. The resin that is poured with the use of this method allows to maintain three-dimensional properties as well as the image changing effect of a drawing on lenticular foil.

## Claims

1. The multilayer printing laminate (1) using the effect of spatially or graphically or color changing image, containing
a layer of printed lenticular foil (4),
**characterized in that** it also contains
an external transparent layer of protective foil (3) of a high surface pressure, placed on a layer of a lenticular foil (4), from the side of inciding light, which is permanently connected with a layer of a lenticular foil, wherein
a lenticular layer (4) and a protective foil layer (3) have sharp edges, and moreover
laminate contains a surface layer made of poured mouldable transparent plastic (2), of a high surface pressure, whereby a sharp edge of protective layer and lenticular layer can create a convex meniscus and limit the outflow of plastic outside the edge of cut protective layer and lenticular layer.

2. A laminate as in claim 1 wherein the plastic (2) is polyurethane resin curable with UV radiation or dual-curing, or epoxy, polyester or silicone resin.

3. A laminate as in claims 1 or 2 wherein the protective foil (3) is a double-sided oriented polypropylene or polyester foil, or foil with polyethylene terephthalate or vinyl polychloride.

4. A laminate as in claim 3 wherein the protective foil (2) is from 5 to 150 microns thick.

5. A laminate as in any of the previous claims, wherein it contains a layer of adhesive film (5) and/ or a load-bearing layer of adhesive film (6).
